# EUROPEAN PATENT APPLICATION

(11) **EP 0 552 819 A2**
(43) Date of publication of application: **28.07.1993**
(21) Application number: 93105399.5
(22) Date of filing: 08.05.1989
(51) Int. Cl.: G01N 21/65, B07C 5/342

(54) **Sorting diamonds or other minerals**

(30) Priority: 06.05.1988 GB 8810723; 06.05.1988 GB 8810724; 05.07.1988 GB 8815941; 07.07.1988 GB 8816156; 07.07.1988 GB 8816157; 07.07.1988 GB 8816164; 07.07.1988 GB 8816165; 07.07.1988 GB 8816167; 09.11.1988 GB 8826225; 23.03.1989 GB 8906853
(62) Divisional of application: 89304642.5
(71) Applicant: GERSAN ESTABLISHMENT, Fl-9490 Vaduz (LI)
(72) Inventor: Stewart, Andrew David Garry, Reading, Berkshire (GB); Smith, Robin Wyncliffe, Croydon, Surrey CR0 6XJ (GB); Smith, Martin Phillip, Wargrave, Berkshire RG10 8BB (GB); Brink, Daniel Johannes, The Willows, Pretoria R9A (ZA); Cooper, Martin, Marlow, Buckinghamshire SL7 2RE (GB); Welbourn, Christopher Mark, Tythebarn Cottage, Maidenhead, Berkshire, SL6 3QF (GB); Spear, Paul Martyn, Reading, Berkshire RG6 4ED (GB)
(74) Representative: Lyndon-Stanford, Edward Willoughby Brooke

(57) **Abstract**

In order to sort diamonds from ore particles to moving on a wide belt conveyor 1, a line is irradiated across the conveyor 1 using a scanning laser 3 so as to excite Raman emission from diamonds, and the emitted radiation is passed through a narrow band pass filter 9 and a laser blocking filter 13 to be detected by a photomultiplier tube 14. The narrow band pass filter 9 allows to pass only the anti-Stokes radiation appropriate to diamonds. The position of the article 2 along the line is determined by a time domain technique, and diamonds are blown by an air jet 23 out of their normal path into a bin 24.

## Description

### Background of the Invention

This invention relates to sorting diamonds or other specific luminescent minerals, such as gemstones like emeralds, rubies or zircons, from ore particles distributed across a wide feed path. The ore particles are irradiated with radiation which excites Raman emission, and one detects the presence of the Raman radiation which is characteristic of the diamonds or other luminescing minerals to be sorted. When sorting ore, one should be able to sort ore which is travelling on a belt at least 0.3 m wide and generally say 1 m or 2 m wide - the particles of ore can occupy a wide path in other ways, for instance if sliding, falling or in free flight or if carried in a liquid stream. The width of the path can accommodate a number of the ore particles.

Much of the remainder of the description is particularly concerned with sensing or detecting Raman radiation on excitation with visible laser radiation, but the invention is applicable to any suitable exciting radiations, such as X-ray, visible, infra-red or ultra-violet radiation, produced by any suitable means. The emission can be detected in any suitable direction relative to the incident radiation, e.g. in the same direction (back illumination) or in the opposite direction (front illumination).

When certain materials are irradiated, in addition to scattering the incident radiation, they emit radiation in the form of broad band fluorescence (wavelengths longer than the excitation wavelength), and in discrete frequencies different due to the Raman shift. The Raman frequency bands (called the Stokes and the anti-Stokes) are different from and equally spaced on either side of the frequency of the incident radiation; the frequency differences are uniquely characteristic of a material. These Raman emissions enable e.g. diamond to be identified and sorted from other materials such as spinel, calcite and zircons. Although there are two Raman frequencies, one normally looks at the lower frequency (longer wavelength) Stokes emission as it has the greater intensity under normal operating conditions.

The intensity of the anti-Stokes Raman signal is, at room temperature, calculated as being approximately one three-hundredths of the intensity of the Stokes signal. This made the anti-Stokes signal very unattractive, particularly having regard to the fact that the Stokes signal itself is very weak; it is difficult to capture sufficient Raman radiation for examination of an object. However, the use of the anti-Stokes signal is disclosed in various analytical techniques, as in GB 1 494 062, GB 1 528 418, GB-A-2 120 779, US 3 782 828, US 4 195 930, US 4 405 237, an article by Bowley and Gerrard in "Optics and Laser Technology", February 1986, pages 33 to 35, and an article by Duncan et al in "Optical Engineering", March/April 1985, pages 352 to 355, and possibly in US 4 512 660. In WO 87/03963, there is a description of the use of the anti-Stokes signal in assessing the colour of diamonds, though not for identifying diamonds per se.

Normally, the exciting radiation not only causes the diamond Raman emissions, but also excites other luminescences or general background radiation. The gangue does not exhibit Raman emission with a frequency shift characteristics of diamond. However gangue, and some diamonds, emit other wavelength radiation or fluorescence, and this gives considerable problems in identifying only the Raman radiation and hence the diamonds. The Raman emission is very weak, and can be completely swamped by the other emitted radiations. The Raman radiation is also in a very narrow band, so it is possible to reduce general background radiation using a commercially-available narrow band pass filter having a narrow pass band. In this context, "narrow" has its normal meaning as used in this art. However, more specifically, it can mean selecting a band of wavelengths which, on an energy/wave length curve, extends approximately from half-amplitude on one side of the emission being examined to half amplitude on the other side. For the invention, and particularly for Raman, the band will normally be of the order of 1 nm, say 1 nm or 2 nm, and is most unlikely ever to be greater than 10 nm. For other photoluminescence, the band could be approximately 20, 30 or 40 nm. The filters used, particularly for narrow band filtering, will normally be interference filters where the band is transmitted; in theory at least, a reflected narrow band could be sensed. Narrow band pass filters are also called line filters.

The possibility of using the Raman shift to sort or identify diamonds has been described in general terms in for instance GB-A-2 121 535, GB-A-2 140 555, GB-A-2 199 657, WO 86/07457 and WO 88/01378. In GB-A-2 140 555, for instance, diamonds are sorted using the Raman emission on irradiation with lasor light, but the Stokes signal is used.

### The Invention

The present invention provides apparatus as set forth in Claim 1 and a method as set forth in Claim 12. The remaining Claims set forth optional features of the invention.
It has been found that the use of the anti-Stokes signal can be advantageous in the particular case of sorting diamonds or other specific luminescing minerals from ore particles distributed over a wide feed path, e.g. sorting diamonds from ore particles on a wide feed belt, when irradiating a line (which need not be rectilinear) across the feed path with radiation which excites Raman emission. The background competing luminescence from e.g. the diamond itself may be significantly reduced on the shorter wave-length (higher energy) side of the incident radiation wave-length, resulting in an improved Raman signal to background ratio. In other words, at the wave-lengths detected, there is less broad band luminescence from the diamond itself. The lessened contamination enables one to use slightly wider band width optical filters in an optical detection system, for instance reducing the necessity to avoid off-axis incident radiation. Furthermore, detection instruments, such as photo-multiplier photocathodes, have enhanced sensitivity at shorter wave-lengths.

The material being sorted can be heated, which increases the relative strength of the anti-Stokes signal.

It would be possible to look at both Raman signals simultaneously, and in this way obtain additional discrimination.

EP-A-0 345 949 describes an invention which enables all radiation being examined to pass through the narrow band pass filter means at an angle of incidence acceptably close to zero, say within ±4°. After the narrow pass band filter means, normal optics can be used. EP-A-0 345 949 should be referred to for further information applicable to the present invention.

The invention is not restricted to using visible wavelengths for the exciting radiation. For instance, the exciting radiation can be X-rays, for example using a collimated wedge to give a wide fan of energy along said line, or even scanning along the line with say a galvo-scanner having a grazing incidence X-ray mirror; or can be ultra-violet or infrared radiation, scanned along the line.

Emitted luminescence can be detected using detecting means responsive to the location from which theluminescence is emitted, to thereby identify the location of a specific diamond or other mineral.

Any means can be used for selecting, identifying or indicating the specific particles which are indicated by the selected frequency radiation sensing means. The preferred way is to use a series of air jets spaced across the path of the particles, but other ways of ejecting can be used. Alternatively an ink or other marking system could be used.

### Preferred Embodiments

In the embodiments of the invention described below, a large number of ore particles are distributed over an area, which is in effect rectangular and is shown as the surface of a belt though the particles could be moved in other ways. As the belt moves relative to (and at right angles to) the irradiated line, the whole area is scanned.

The invention will be further described, by way of example, with reference to the accompanying drawings, in which:-
Figure 1 is a graph of percentage transmitted energy (%T) against wavelength in nm, showing a set of curves for various angles of incidence for a narrow band pass filter of nominal value λ nm with a nominal band width of 1.4 nm at half maximum transmissivity;
Figure 2 is a schematic side view of a first apparatus;
Figure 3 is a schematic view, taken at right angles to the view of Figure 1;
Figures 4a, 4b, and 4c are three alternative radiation spectra;
Figure 5 illustrates the output of the PMT (photo-multiplier tube) of Figure 2.
Figure 6 is a schematic plan view of the end of the belt in Figure 2;
Figure 7 is a diagram of the apparatus of Figure 2 and associated electronic components;
Figure 8 corresponds to Figure 2 but shows a second apparatus;
Figure 9 is an isometric view of a possible collection means in Figure 8;
Figure 10 is a schematic view of a third apparatus;
Figure 11 is a schematic view, taken at right angles to the view of Figure 10;
Figure 12 is a schematic view of a test apparatus;
Figure 13 is a schematic view of a fourth apparatus; and
Figure 14 is a schematic view of an alternative arrangement that can be incorporated in the apparatus of Figure 13.

Throughout, the same references indicate the same or similar items. Variations discussed in relation to any embodiment can be applied to the other embodiments, if appropriate.

### Figure 1

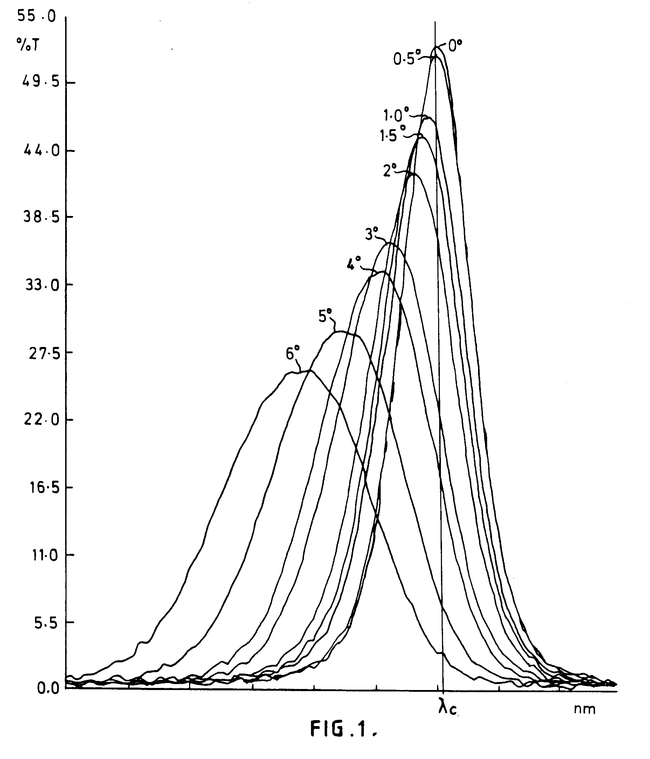

Figure 1 is explained and discussed in EP-A-0 345 949.

### Figures 2-7

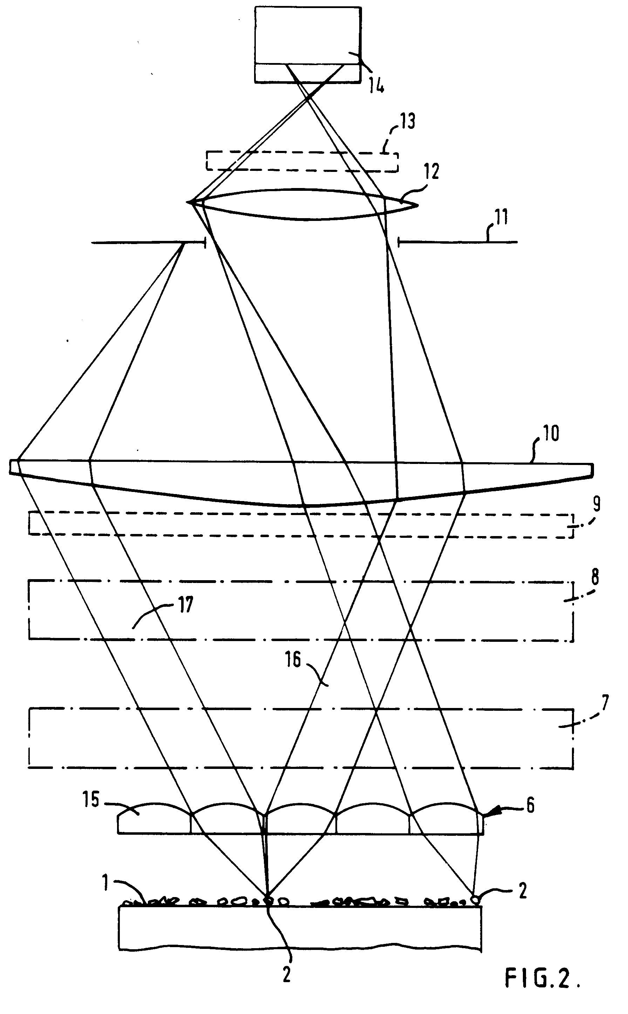

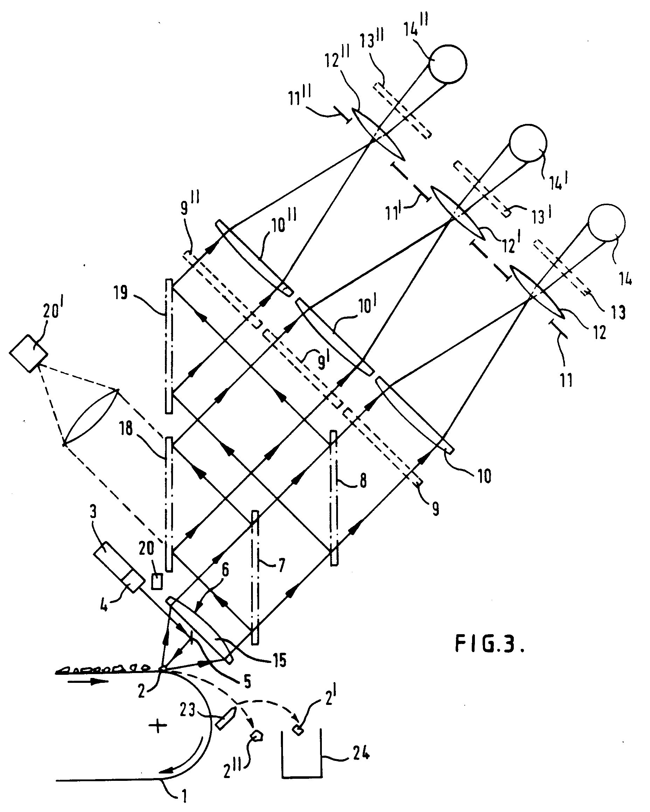

In Figures 2 and 3, a moving belt 1 (made of material which does not luminesce at the excitation frequency, i.e. at the frequency of the laser) is wide, i.e. of substantial width, and carries a single layer of ore or gangue particles 2. In this way, the particles are distributed widthwise over and move along a path whose width is capable of accommodating a number of the particles 2. The particles 2 have been formed by roll crushing, and have been screened so that they are in a predetermined size range. In general terms, it is preferred that the particles 2 should be of roughly similar sizes; the (plan view) occupancy on the belt 1 should be such as to reduce the effects of piling or shielding - one suitable occupancy is 5%, but it could vary for example from 4% to 80%. The sizing and occupancy can be arranged using known mechanical means.

A laser 3 projects exciting radiation along an extended line transversely of the belt 1. This can be achieved in any suitable way; for instance, the laser 3 can be scanned along the line using a scanning unit 4, in which case the laser 3 can be say a 2 watt laser. Other alternatives are possible, e.g. using a linear array of a multitude of laser diodes. The optics can be arranged in any suitable way and Figure 3 is only schematic - preferably the laser 3 is effectively on the same optical axis as the viewing system described below, so that on each ore particle 2, the same point is illuminated and examined; for instance, a narrow, transverse mirror 5 can be used - other possibilities are discussed below. A separate viewing system can be added to examine, e.g. at 90° to the incident radiation, for instance to sense a diamond on the side of a larger lump of ore, though different focal lengths and lens widths may be required.

The line is examined with a viewing system having collection means in the form of a multi-lens array 6, beam splitters 7,8, a narrow band pass or line filter 9, a converging lens 10, a telecentric stop 11, a field lens 12, a laser blocking filter 13 and a PMT 14, the PMT 14 being a sensing means and sensing the selected frequency radiation emitted by particles 2.

The filter 9 is chosen to pass the anti-Stokes signal. A 2 nm or 1 nm band can be passed, centred on the signal in question. If the gangue is irradiated with an argon ion laser 3 operating at 514.5 nm, the principal Raman emissions of diamond consist of two sharp lines at 552.4 nm (the Stokes signal) and 481.5 nm (the anti-Stokes signal); if a helium neon laser 3 is used, operating at 632.8 nm, the principal Raman emissions of diamond consist of two sharp lines at 691.1 and 583.6 nm.

The collection means usually extends parallel to the irradiated line on the belt 1, and in effect has individual sections formed by an array of side-by-side converging elements or lenses 15 forming the multi-lens array 6. Each lens 15 is of elongate, rectangular shape as seen looking along the optical axis, arranged so that in the plane normal to the optical axis, the geometrical major axes of the lenses 15 are parallel and at 90° to the irradiated line. The ore particles 2 are roughly at the focus of the lenses 15 so that each individual lens 15 provides roughly parallel rays from points on the particles 2. As can be seen in Figure 3, each lens 15 has a long dimension parallel to the direction of movement of the belt 1, and thus captures a large amount of radiation coming from each particle 2, having an f number of 1 or less. As can be seen from Figure 2, each lens 15 is narrow across the belt 1, having an f number of 7 or more. Thus each lens 15 receives a three-dimensional sector of emission from the particles 2 on the belt 1, which sector, as seen looking along the irradiated line, is substantially larger than as seen looking at 90° both to the line and to the optical axis. The roughly parallel rays are focused by the converging lens 10 roughly in the plane of the telecentric stop 11. As illustrated diagramatically in Figure 2, the effect of this is (ideally) that rays which pass through a lens 15 which is not immediately above a particle 2 are stopped by the stop 11; Figure 2 illustrates two ray bundles 16,17 from an object 2 which is nearly on the boundary between two lenses 15; the ray bundle 16 from the lens 15 above the object 2 is not stopped whereas the ray bundle 17 from the adjacent lens 15 is stopped. In practice, there may be a little overlap, a particle 2 nearly on the boundary being sensed through two lenses 15, but this need not matter though it gives rise to the periodicity referred to above. Thus the ray bundle having the greater angle of incidence on the filter 9 is stopped, and the viewing system can be arranged such that any ray having an angle of incidence greater than ± 4° (or any specific, chosen angle) is stopped. In this way, as seen looking at 90° to the irradiated line, just a limited, relatively narrow sector of the radiation from each part of the line is sensed and analysed. The width of each lens 15 and the number of lenses 15 needed to cover the inspection zone is determined by the geometrical constraints outlined above; however, with lenses 15 of focal length 70 mm and a chosen acceptable filter angle of incidence of ±4°, 100 lenses 15 per metre width of belt are desirable. The optical axis of each individual lens 15 is substantially normal to the filter 9. The stop 11 can have a rectangular aperture, say 10 mm wide for examining a belt width of 300 mm.

In the other plane, looking along said line (Figure 3), there is no problem with rays of high angles of incidence passing through the filter 9 as the radiation is emitted just from one scan line across the belt 1 - particles 2 on either side of the scan line are not irradiated and there are no off axis images.

The viewing system may pick up specular reflection of the laser radiation, of very great intensity compared to the Raman intensity. The laser blocking filter 13 is included as a significant amount of the laser wavelength will pass through the filter 9. The laser blocking filter 13 is not angularly dependent and can be placed anywhere in the optical system, but it is preferably placed immediately in front of the PMT 14 as only a smaller diameter is required in this plane. The laser blocking filter 13 can be a glass absorption filter and the amount of blocking can be chosen by choosing the correct thickness of glass.

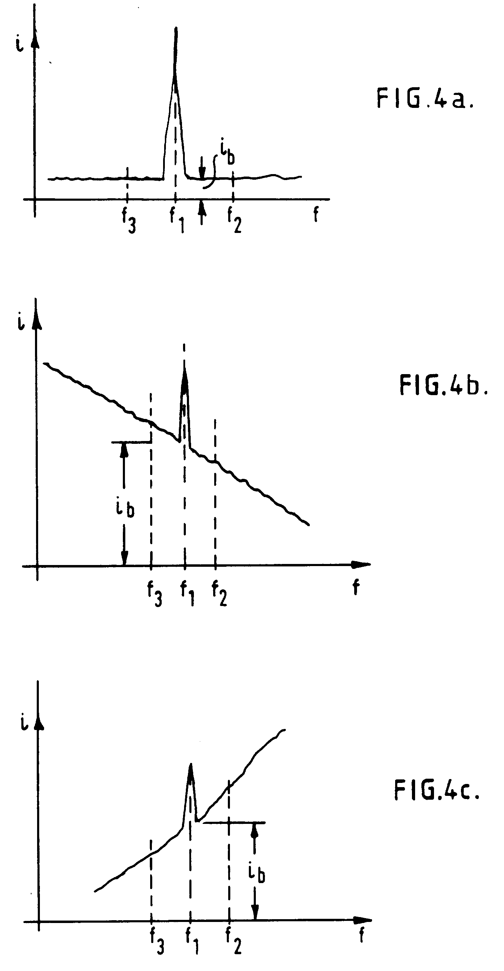

Any number of beam splitters can be used in the optical system in order to abstract part of the radiation for specific purposes. As shown in any of Figures 4a, 4b and 4c, which are graphs of intensity (i) against frequency (f) for the emission of excited radiation by diamond, the Raman frequency f₁ (the Stokes signal or the anti-Stokes signal, whichever is chosen) is against a background radiation i_{b} at the same frequency - the Raman radiation is just a small blip in a luminescence spectra. Although it is not essential to subtract the background radiation, better sensing and higher accuracy are obtained if this is done. In effect, the background radiation is sensed at two different frequencies f₂,f₃ close on either side of the Raman frequency f₁, many relations of f₁, f₂ and f₃ may be used in a processing algorithm, one of which may be such that the signals of the frequencies f₂,f₃ are averaged, and the average is subtracted from the signal sensed at frequency f₁, thus distinguishing the Raman signal from the background signal. The frequencies f₂,f₃ can for example be 15 nm on each side. Using the beam splitters 7,8 and associated mirrors 18,19, part of the beam is directed into respective band pass filters 9',9'', converging lenses 10',10'', telecentric stops 11',11'', field lenses 12',12'', laser blocking filters 13',13'' and PMT's 14',14''. However any suitable geometric arrangement can be used. The band pass filters 9',9'' pass the frequencies f₂,f₃. As the frequencies f₂,f₃ are not critical, a relatively wide band, e.g. 10 nm wide, can be sensed and the band pass filters 9',9'' allow a correspondingly wide band of frequencies to pass; the band will be a multiple of the band passed by the filter 9. This arrangement means that the beam splitters 7,8 only need to split off just a small proportion, say 4% or 5% of the radiation.

Various techniques can be used to indicate or identify the particle 2 which emitted Raman radiation. Some techniques are given below, but further techniques are given in EP-A-0 345 949.

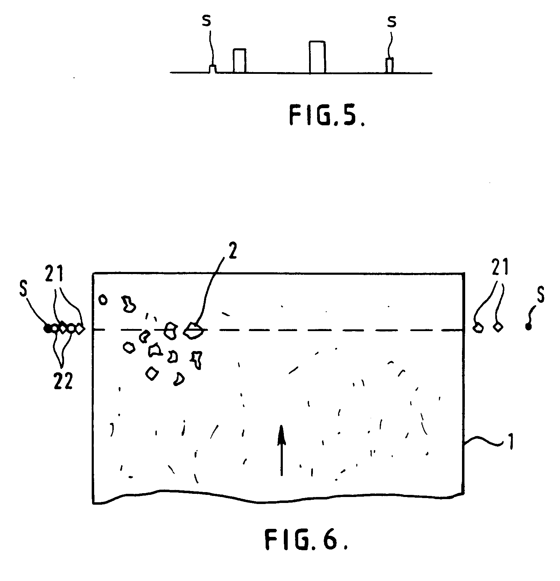

According to a first technique, a single PMT 14 can be used even if the belt 1 is very wide, scanning the exciting radiation with a scanning frequency which will depend upon the belt width and the speed and size of the particles; alternatively, a number of modules can be used with a corresponding number of PMT's, the same principle being employed in each module. If the exciting radiation is simply scanned, or if it is effectively scanned by spacing a number of time-division multiplexed lasers along the scanning line, a simple time domain technique indicates or identifies which particle 2 has emitted Raman radiation. Figure 5 illustrates the signal from the PMT 14. Markers S, which can be adjustable physical stops or luminescing tracers, define the ends of the irradiated line (see Figure 6) and give start and end registrations on the output signal. Knowing the start and end of scan, via the markers S, the location of the specific particle 2 is determined. In other words, the location of the particle 2 from which the narrow band radiation emitted is identified from the position of the scan at the instant of detection of the emitted radiation.

As a single, general technique, and particularly if the exciting radiation is not scanned (being e.g. X-radiation), it is possible to incorporate position-sensitive sensing means 20 or 20' sensitive to radiation such as general background luminescence (strong luminescence) emitted by diamonds and positioned such that the further sensing means 20 or 20' sense radiation which has not passed through the filter 9. Any Raman signal (weak luminescence) from a particle 2 detected by the PMT 14 indicates the presence in the irradiated line of a specific particle 2 to be sorted. The signal from the PMT 14 is passed (e.g. via an amplifier) to the module 39 and the positional signal from the sensing means 20 or 20' can be passed through an amplifier to a registration module which analyses the position of the signal from the sensing means 20' (or 20) with respect to the width of the belt and gives a signal to the module 39 which includes time and position. When simultaneous signals are received from the PMT 14 and the sensing means 20 or 20', the air jet control 41 (see below) actuates an appropriate air jet 23 in accordance with the positional signal from the registration module and the specific particle 2 is blown out of its normal path.

The further sensing means 20 or 20' not only detect the presence of the specific particle 2 but also give a signal indicating its position. Thus a specific particle 2 is indicated when the PMT 14 and the sensing means 20 or 20' sense simultaneously. When sorting diamonds from ore, this can give a high confidence particle sort.

The further sensing means 20 may be a CCD camera or array or a position sensitive PMT.

A preferred arrangement is to have a scanned 1024 element CCD array 20 (or 20') behind a micro-channel plate signal intensifier, the information being taken off along a single channel by scanning or multiplexing. Very accurate positional information is given, but only a very simple optical system is required. Knowing the start and end of scan, via the markers S, the belt 1 can be sectioned in tracks according to groups of the CCD pixels, which groups can activate individual air jets 23 (see below).

The sensing means 20 can be provided with a laser line (narrow band) rejection filter for laser exciting radiation, or with a pass filter in the X-ray luminescence band (say 280 to 300 nm) for X-ray exciting radiation. However, if occupancy is being monitored, a laser pass filter is used for laser exciting radiation, to employ the laser wavelength.

As shown in Figure 3, the sensing means 20 is preferably outside the viewing system, though (as shown in Figure 3 at 20' as an alternative arrangement) it could be in the viewing system after the lens array 6, with a suitable beam splitter 18. As a further alternative, the sensing means 20' can be incorporated as well as the sensing means 20 and serve a different purpose, namely to view across the width of the belt 1 in order to monitor the occupancy of the belt 1; the occupancy can be altered by automatically changing the feed in a known way.

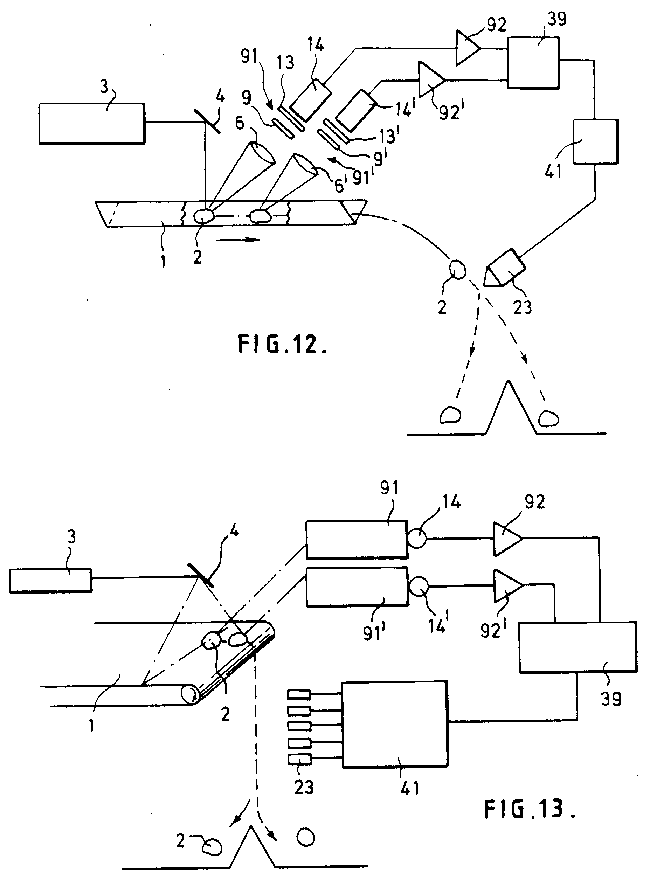

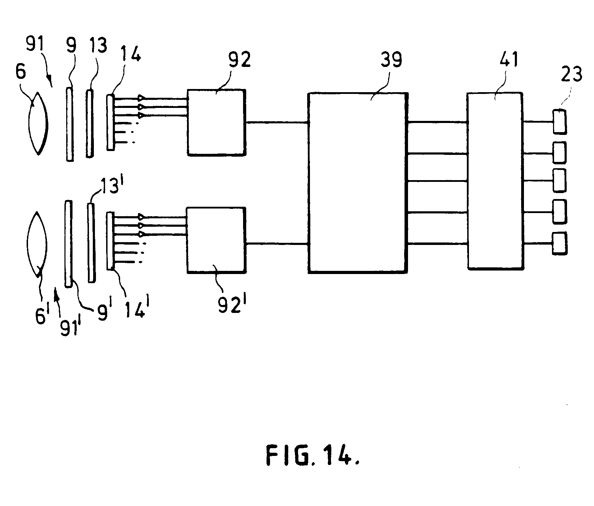

According to another technique, the method described below with reference to Figures 13 and 14 can be used.

The system shown in Figures 2 to 7 has three channels, namely a main detection channel for one of the Raman frequencies, and two side channels. For more accurate sorting, more channels could be used, for example a further main detection channel for a different frequency emitted signal and its own two side channels.

In some arrangements, there is no need of the beam splitters or other arrangements for subtracting background radiation. In some cases, all diamonds except type IIb diamonds can be distinguished by their luminescence - type IIb diamonds do not luminesce but do emit Raman radiation. Using a rather wider band pass filter 9 (which however still gives angle of incidence problems) and a laser blocking filter 13, all the diamonds can be indicated or identified.

It is possible to place a broad pass band filter in front of the narrow pass band filters 9, 9', 9'', e.g. to select a broad band with a Raman frequency in the middle.

Any of the components in the viewing system can be replaced by equivalent components - for instance, holographic plates or mirrors or parabolic concentrators can be used instead of ordinary or Fresnel lenses; the field lenses 12, 12' and 12'' could as a further alternative be replaced by inclined mirrors or light tubes. Precise focussing is not required, only the collection of the appropriate photons.

The optics of the laser 3 may be different. For instance, the mirror 5 could be behind the collection lenses 15, or an aluminised strip could be provided on the beam splitter 7 with a gap formed in the mirror 18; in such a case, a long slot can be formed in the collection lens array 6, or the lens array 6 can be used to focus the laser beam cylindrically along the scan line.

Figure 6 illustrates a monitoring means for self-calibration on-line (i.e. without stopping sorting), or for giving a signal to indicate that there is a malfunction. A line S-S is scanned on the belt 1 from point S to point S. On each side of the belt 1 there are first zones represented by tracer stones 21, which may be made of synthetic diamonds mixed with epoxy resin, on one side of the belt 1 there are two second zones or beam dumps in the form of holes 22 which absorb all radiation. Using a suitable detector, e.g. the CCD camera 20' shown in Figure 3, the radiation from the tracer stones 21 and holes 22 can be sensed and processed to give signals, automatically, e.g. to increase or decrease the gain of the PMT's 14, 14' and 14''. The signals generated by the tracer stones 21 and holes 22 can be integrated over say 6 seconds to reduce random effects.

Figure 3 illustrates schematically a row of air jets 23 for selecting (i.e. indicating or identifying) diamonds 2' by blowing them out of the trajectory followed by non-diamond material 2'', a diamond-receiving bin 24 being schematically indicated; naturally any other particle that also meets the selected criteria will also be selected.

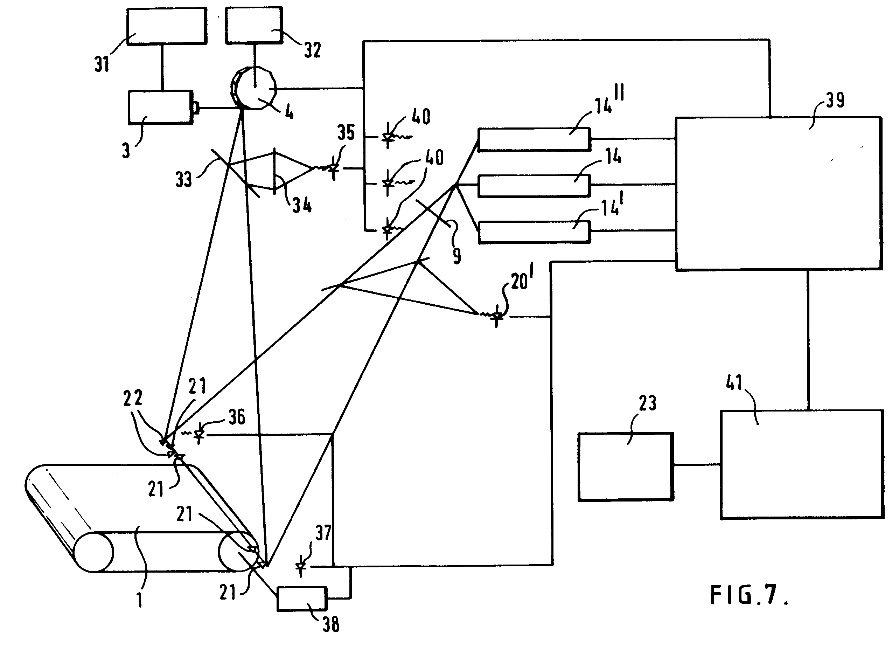

Figure 7 illustrates the identification and control system. The following further items are illustrated in Figure 7, but their function and interconnection need not be described in detail: laser drive and shutter control 31, scan (polygon) motor drive 32, beam splitter 33, grating 34 and associated lens system, photo sensor 35, start and end of scan detectors 36, 37, belt speed encoder 38, measurement and test module 39 (a microprocessor), test light emitting diodes 40, and air jet control system 41.

Any suitable scan frequency can be used for the radiation. The scan will normally be simple direction without fly-back, e.g. using a rotating 64 facet polyhedric mirror as the scanning unit 4. Assuming point focus (which could be in a plane spaced above the belt at half the expected particle height), a 133 Hz scan at a belt speed of 1.6 m/s and with a 300 mm scan width gives 1/2 mm resolution, suitable for 1 mm particles; a 400 Hz scan at a belt speed of 5 m/s and with a 1000 mm scan length gives 1 mm resolution, suitable for 3 mm particles.

If the belt 1 is very wide, two or more lasers 3 and/or two or more of the optical modules 6 to 14 can be used side-by-side.

### Figures 8 and 9

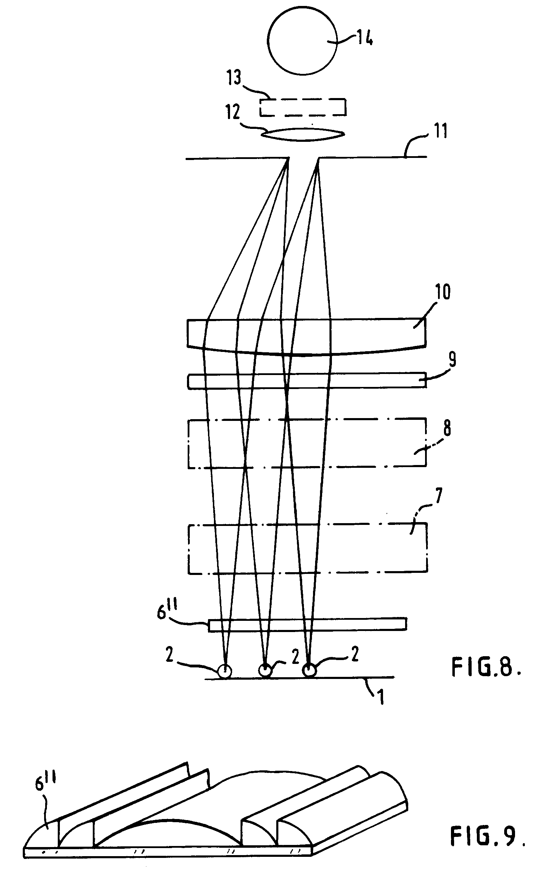

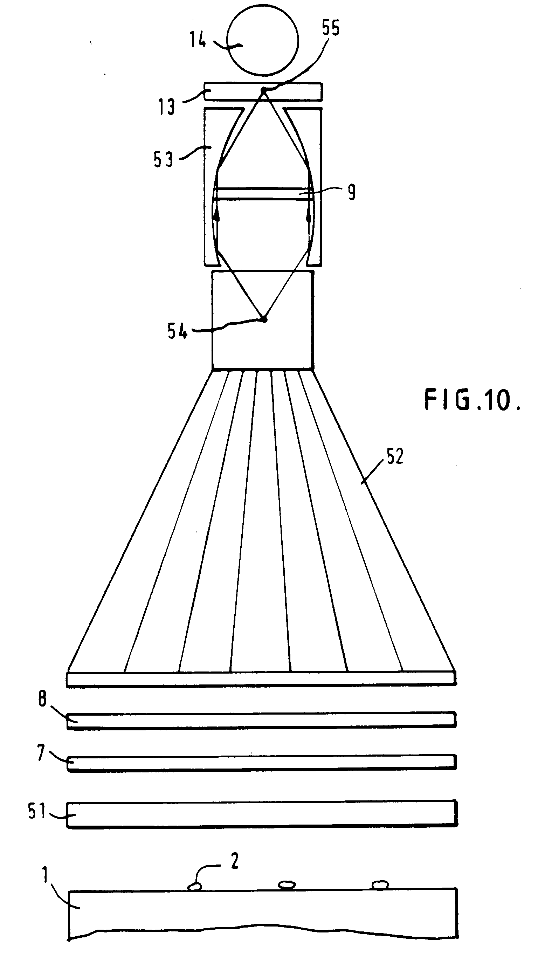

Figure 8 corresponds to Figure 2 and items performing the same functions are referenced with the same references and not further explained. The most significant difference is that a cylindrical lens 6'' is used instead of the multi-lens array 6 of Figures 2 and 3. Figure 3 shows the arrangement of Figure 8, as seen looking along the line. The lens 6'' can be aspheric and/or a Fresnel lens, a Fresnel lens being shown in Figure 9, and corrects aberrations and increases the f No.

The stop 11 is in the focal plane of the lens 10, which is a normal spherical lens. This means that as seen looking along said line (Figure 3), the rays are focussed in the plane of the stop 11, whereas as seen looking at 90° to said line (Figure 8), the rays are focussed behind the plane of the stop 11. Nonetheless, as seen from the ray bundle shown in Figure 8, the stop 11 stops out any rays which have an angle of incidence greater than a predetermined maximum on the narrow band pass filter 9.

With a cylindrical lens 6'' of focal length 70 mm, it is possible to have a depth of focus of approximately ±10 mm. The depth of focus can be increased if the length and size of the optical system is increased.

### Figures 10 and 11

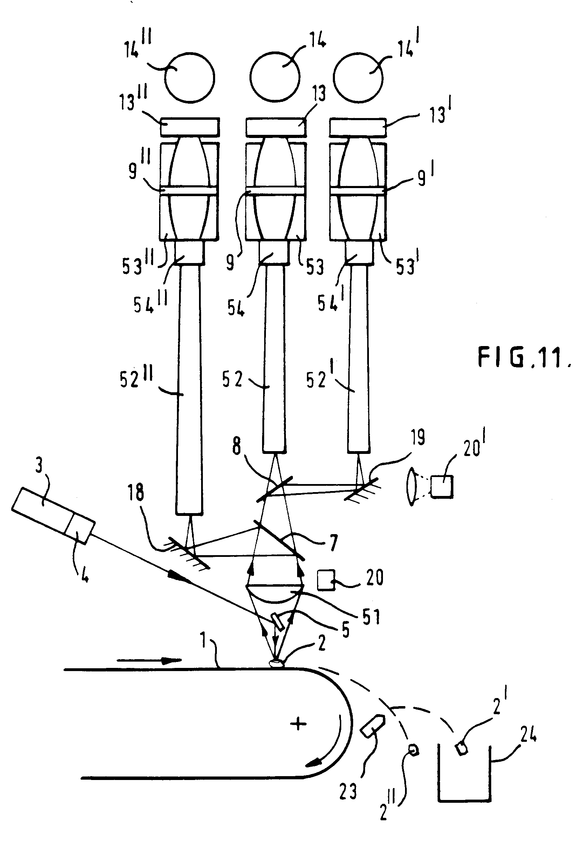

There is a collection means extending parallel to the irradiated line on the belt 1, and comprising a cylindrical lens 51 and an acrylic light pipe (also known as a light tube, line array system or a concentration collection assembly) 52. The cylindrical lens 51 can be a Fresnel lens, and need not be of circular cross-section. The lens 6 collects and focuses the light emitted from the objects 2 on the line, forming a line image at the input of the light pipe 52, acting as a light guide. The light pipe 52 is merely a fan-shaped arrangement of reflecting partitions with a top and bottom. This translates the line image into a circular image at the output end of the light pipe 52, but the light leaving the light pipe 52 leaves at all angles of incidence - the cylindrical lens 51 should be positioned at such a distance from the particles 2 that it maximises energy collection (as seen in the plane of Figure 11) into the light pipe 52. The light is collected by a compound parabolic concentrator (CPC) 53, which, as shown in Figure 2, collects the light from one focus 54, collimates it within the CPC, i.e. forms the rays into a bundle of roughly parallel rays, and re-focuses it at the second focus 55. The narrow band pass filter or line filter 9 is placed in the centre plane of the CPC 8, normal to the optical axis, i.e. within the region of roughly parallel light.

The filter 9 can be as described above in relation to Figures 2 to 7.

The CPC 8 is followed by the laser blocking filter 13 and a photo-multiplier tube (PMT) 14.

As in Figures 2 to 7, in the other plane, illustrated in Figure 11, there is no problem with rays of high angles of incidence passing through the line filter 11.

As in Figures 2 to 7, any number of beam splitters can be used in the optical system in order to abstract part of the radiation for specific purposes, and any suitable geometric arrangement can be used.

For more accurate sorting, more channels could be used, for example a further main detection channel for a different frequency emitted signal and its own two side channels.

As discussed above, there may be no need of the beam splitters or other arrangements for subtracting background radiation.

Various techniques can be used to indicate or identify the particle 2 which emitted Raman radiation, as described above with reference to Figures 2 to 7.

As mentioned in relation to Figures 2 to 7, it is possible to place a broad pass band filter in front of the narrow pass band filters 9, 9', 9", e.g. to select a broad band with a Raman frequency in the middle.

Any of the components in the viewing system can be replaced by equivalent components - for instance, holographic plates or mirrors or parabolic concentrators can be used instead of ordinary or Fresnel lenses. The light pipes 7, 7', 7'' could as a further alternative be without internal fan-shaped walls, or be replaced by two inclined mirrors, or by bundles of fibres, e.g. of decreasing cross-section. The CPC's 8, 8', 8'' could be without their second half, other optics being used behind the filters 9, 9', 9''. The CPC's 8, 8', 8'' could be just two parallel plates in the section of Figure 3. Precise focussing is not required, only the collection of the appropriate photons.

The optics of the laser 3 may be different, as mentioned in relation to Figures 2 to 7. Monitoring means for self-calibration on-line can be included, as described in relation to Figures 2 to 7.

### Figures 12 and 13

In general, each embodiment has two optical detection modules 91, 91', each of which comprises an efficient optical signal collection system schematically represented at 92, 92', a narrow band pass filter 9, 9', a blocking filter 13 for the exciting radiation, and a detector 14, 14'. The optical signal collection system can be the system described with reference to Figures 2 to 7. The detector 14. 14' can be any suitable detector, such as a PMT or a diode. Each detector 14, 14' is selected and operated in a mode to enhance its time resolution characteristics. The detectors 14, 14' are connected through amplifiers 92, 92' to a microprocessor 39 whose output signal is passed to an air jet logic 41 which actuates one or more air jets 23 to eject the required particle 2 from its normal trajectory.

The first module 91 detects the signal given by the particle 2 during excitation. The second module 91' detects the signal, if any, after the particle 2 has passed through the exciting radiation. A decision is made on the two signals in the microprocessor 39, whether the particle 2 is of interest and should be ejected. The anti-Stokes Raman luminescence is detected by the first module 91 and the broad band fluorescence background is detected by the second module 91'. The signal given by the second module 91' is subtracted from the signal given by the first module 91, to determine if the anti-Stokes radiation is present on the signal detected by the first module 91.

In an alternative arrangement, using different narrow band pass filters 9, 9', different wavelengths can be detected by first and second modules 91, 91'.

Figure 12 shows a test arrangement in which a fast-moving V-belt 1 confines gangue particles 2 on the belt 1 to travel along a straight line (as seen in plan). The irradiating means 3, which may be a laser, illuminates a spot in the centre of the belt 1.

Figure 13 shows an arrangement in which a wide belt 1 is used. A line across the belt is irradiated using the means 4 which can be a scanner provided with an encoder connected to the microprocessor 39, or (particularly if the radiation is X-ray, for instance a tungsten target X-ray tube operating at 40 kev), merely spreads the radiation along a transverse line. The optical modules 91, 92' examine the whole width of the belt 1 and detect the position of the required particle 2 across the belt, the appropriate air jet 23 being energised.

Figure 14 shows an arrangement in which the optical systems 91, 91' can be much simpler, the detectors 14, 14' being intensified CCD arrays each inspecting a section of, or track along, the belt 1 and aligned with the corresponding CCD element of the other optical system. The individual CCD elements are connected through amplifiers 92 in a conventional manner so as to be able to give positional signals.

The time interval between the two detection modules 91, 91' will depend upon the luminescence being detected and analysed, but one arrangement provides an interval of 0.1 - 0.5 seconds, with a belt speed of 1 - 5 ms and the modules 0.5 m apart. The time interval will depend upon physical limitations in designing the apparatus. The distance apart can be 50 nm, achievable using mirrors.

Beam splitters (not shown) and additional optical channels can be incorporated to enable a number, say three, of different wavelength bands to be examined for attenuation.

### Examples

A test was carried out using the apparatus of Figure 12. The first module 91 detects anti-Stokes Raman from diamonds and the second module 91' detects broad band luminescence from diamonds. Belt speeds are 1.6 m/s for Example 1 and 3 m/s for Example 2. The laser (Argon ion) wavelength is 514.5 nm. Filters 9, 9' are centred at 552.4 nm with a pass band of 1 or 2 nm. For sorting, a signal at the first module 91 and not at the second module 91' indicates Raman and hence diamond; a signal at the first module 91 and also at the second module 91' indicates luminescence and (usually) not diamond - most diamonds have a luminescence which is short compared to that of gangue materials.

The present invention has been described above purely by way of example, and modifications can be made within the invention.

## Claims

1. Apparatus for sorting diamonds or other specific luminescing minerals from ore particles (2) distributed over a wide feed path (1), for use in association with means (3,4,5) for irradiating a line across the feed path (1) with radiation which excites Raman emission, the apparatus comprising means (9,14) for detecting the emission of the Raman radiation which is characteristic of the diamonds or other specific minerals,
characterised in that the detecting means (9,14) are for detecting the anti-Stokes radiation which is characteristic of the diamonds or other specific minerals to be sorted.

2. The apparatus of Claim 1, and comprising viewing means (6,6' or 52) for viewing all or an extended part of said line and sensing the anti-Stokes radiation, the viewing means comprising narrow band pass filter means (9) which, within a specific angle of incidence, substantially filter out all but said narrow frequency band, sensing means (14) for sensing radiation which has passed through the filter means, and means (11 or 53) for preventing rays outside said angle of incidence reaching the sensing means (14).

3. The apparatus of Claim 2, wherein the viewing means comprise collection means (6 or 6') which allow to pass through the filter means (9) both rays which are within said angle of incidence and rays which are outside said angle of incidence, and means (6 or 6',11) for stopping any rays which have passed through the filter means (9) outside said specific angle of incidence.

4. The apparatus of Claim 3, wherein the stopping means comprise converging means (6 or 6') which, as seen looking at 90° to said line, converge radiation from said points, and a telecentric field stop (11) which stops any rays which have passed through the filter means (9) outside said specific angle of incidence.

5. The apparatus of Claim 2, wherein the collection means comprise forming means (53) which, as seen looking at 90° to said line, form radiation from any point on the line or an extended part thereof, into substantially parallel rays within said specific angle of incidence, and pass the substantially parallel rays through the filter means (9).

6. The apparatus of any of the preceding Claims, and comprising beam splitter means (7 or 8) for splitting radiation emitted by the diamond or other luminescing mineral, a first beam being directed to narrow band first band pass filter means (9) which pass the respective anti-Stokes radiation frequency and another beam being directed to second band pass filter means (9' or 9'') which pass radiation at a second frequency close to but different from the anti-Stokes radiation frequency, first sensing means (14) for sensing the anti-Stokes frequency radiation, second sensing means (14' or 14'') for sensing said second frequency radiation, and means (39) for comparing said anti-Stokes radiation as sensed by the first sensing means (14) and said second frequency radiation as sensed by the second sensing means (14' or 14'') to substantially eliminate any background radiation at the anti-Stokes radiation frequency.

7. The apparatus of any of Claims 1 to 5, and comprising beam splitter means (7, 8) for splitting the radiation emitted by the diamond or other luminescing mineral, a first beam being directed to narrow band first band pass filter means (9) which pass the respective anti-Stokes radiation frequency, a second beam being directed to second band pass filter means (9') and a third beam being directed to third band pass filter means (9''), which second and third band pass filter means (9',9'') pass radiations which are of second and third frequencies close to but different from the anti-Stokes frequency and on either side of the anti-Stokes frequency, first sensing means (14) for sensing the anti-Stokes frequency radiation, second and third sensing means (14',14'') for sensing said second and third frequency radiations, and means (39) for comparing said selected frequency radiation as sensed by the first sensing means (14) and the mean of said second and third frequency radiations as sensed by the second and third sensing means (14', 14''), to substantially eliminate any background radiation at the anti-Stokes radiation frequency.

8. The apparatus of Claim 6 or 7, wherein the beam splitter means (7, 8) are arranged such that the energy of the first beam is a multiple of the energy of the or of each of the other beam(s), and the second or the second and third band pass filter means (9', 9'') pass a frequency band whose width is substantially greater than that of the frequency band passed by the narrow band pass filter means (9).

9. The apparatus of any of the preceding Claims, and comprising means (1) for inducing relative motion between the ore particles and said line in a direction generally transverse to said line.

10. The apparatus of Claim 9, for sorting the ore particles (2) on a moving conveyor (1), said line extending across the conveyor (1).

11. The apparatus of any of the preceding Claims, and including said irradiating means (3,4,5).

12. A method of sorting diamonds or other specific luminescing minerals from ore particles (2) distributed across a wide feed path (1), comprising irradiating (3,4,5) the ore particles (2) with radiation which excites Raman emission, and detecting the presence of the Raman radiation which is characteristic of the diamonds or other luminescing minerals to be sorted,
characterised in that one detects the presence of the anti-Stokes Raman radiation which is characteristic of the diamonds or other specific minerals to be sorted.

13. The method of Claim 12, and carried out using the apparatus of any of Claims 2 to 8.
